# EUROPEAN PATENT APPLICATION

(11) **EP 2 704 037 A2**
(43) Date of publication of application: **05.03.2014**
(21) Application number: 13181543.3
(22) Date of filing: 23.08.2013
(51) Int. Cl.: G06F 17/30

(54) **A method for generating or updating an interactive webpage**

(30) Priority: 31.08.2012 US 201261695747 P
(71) Applicant: Sitecore A/S, 1606 Copenhagen V (DK)
(72) Inventor: Christensen, Jakob Hjort, DK-2770 Kastrup (DK)
(74) Representative: Inspicos A/S

(57) **Abstract**

A method for generating or updating a webpage is disclosed, the webpage residing on a server. A main layout, substantially covering the webpage, is provided. Two or more rendering elements and at least one page code object are provided within the main layout. At least one of the rendering elements defines interactive functionality allowing changes to be performed to the rendering element, e.g. by a visitor visiting the webpage. Relations are provided between the rendering elements, said relations allowing the rendering elements to interact in such a manner that changes performed to one rendering element affect one or more settings of another rendering element.

The page code object contains information regarding the rendering elements and the relations between the rendering elements, and the page code object controls, in response to changes performed to one rendering element, changes to one or more settings of another rendering element, by means of said information regarding the rendering elements and the relations between the rendering elements. Thereby the page code object generates or updates the webpage.

## Description

### FIELD OF THE INVENTION

The present invention relates to a method for generating or updating a dynamically generated, interactive webpage, i.e. a webpage which is generated from meta-data and allows visitors visiting the webpage to interact with the webpage. The method of the invention allows a dynamic and interactive webpage to be easily built, and allows various elements of the webpage to interact.

### BACKGROUND OF THE INVENTION

To an increasing extent webpages contain elements which allow a visitor visiting the webpage to interact with the webpage. Such elements may, e.g., include search fields, check boxes, e.g. for selecting language of certain parts of the webpage, polls, etc. In the case of search fields, the result of the search must be presented on the webpage. In prior art webpages this is typically done by presenting the search result within the element containing the search field. This has the consequence that customized code must be provided for each interactive element on the webpage. This makes it relatively complicated to build the webpage.

US 7,856,345 discloses a system and method for controlling user interface (UI) properties with data. The system decouples the user interface and the data, along with its application logic, by providing a mechanism for associating data to the user interface. A binding specification describes a relationship between the UI property and the data value. The binding specification is used by system level code to determine the manner in which it is notified when the data value undergoes a change and the manner in which it is notified when the data value undergoes a change and the manner in which it directs the UI portion to reflect the change in the UI property. The binding specification identifies a source data item, a path to the data value in the source data item, a target UI element, and the UI property on the target UI element.

US 8,095,565 discloses a metadata driven user interface. Metadata can be interpreted and then rendered to implement a customized UI that also supports data binding between data and the UI controls. Once created, the metadata is processed by a rendering engine to display the UI controls. An object model is exposed that allows the developer to read/modify properties of the controls on the form such that the event-handlers are defined in the code behind assembly. The name and location of the code behind assembly is captured as part of the metadata.

US 8,001,107 discloses a method and a system for managing one or more landing pages. The system enables creation of landing pages using one or more pre-coded templates, and subsequently coding them with one or more Dynamic Link Libraries (DLLs) and web services. The method includes dynamic update of the created landing page with content from one or more databases.

### DESCRIPTION OF THE INVENTION

It is an object of embodiments of the invention to provide a method for generating or updating a webpage, the method allowing interactive elements of the webpage to be handled in an easy manner.

According to a first aspect the invention provides a method for generating or updating a webpage, the webpage residing on a server and being presented on a client, the method comprising the steps of:
- providing a main layout, said main layout at least substantially covering the webpage,
- providing two or more rendering elements within the main layout, each rendering element being adapted to perform a function and/or an action, and at least one of the rendering elements defining interactive functionality allowing changes to be performed to the rendering element,
- providing relations between the rendering elements, said relations allowing the rendering elements to interact in such manner that changes performed to one rendering element affects one or more settings of another rendering element,
- providing at least one page code object within the main layout, said page code object(s) containing information regarding the rendering elements and the relations between the rendering elements, and
- in response to changes performed to one rendering element, the page code object(s) controlling changes to one or more settings of another rendering element, by means of said information regarding the rendering elements and the relations between the rendering elements, thereby generating or updating the webpage at the client.

The invention provides a method for generating or updating a webpage. The webpage may form part of a website. In the present context the term 'website' should be interpreted to mean a collection of related webpages, images, videos or other digital assets being addressed relative to a common Uniform Resource Locator (URL). The webpages of the website may advantageously be designed, presented and linked together to form a logical information resource and/or transaction initiation function. According to the invention, the website being generated or updated is residing on, or hosted on, a server. The server, and thereby the website, is typically accessible via a data network, such as the Internet or a Local Area Network (LAN). It should be noted that, in the present context, the term 'server' should be interpreted to cover a single device as well as two or more individual devices being interlinked in such a manner that they, to a visitor of the website, seem to act as a single device.

In the following the term 'static webpage' should be interpreted to mean a hardcoded webpage, which is generated when it is designed. A static webpage does not change until a new version of the webpage is compiled, e.g. being published via a CMS. The webpage is, in this case, static at the server. For instance, the same components may always be present on the webpage, and little or no code is running on the server to generate the webpage. One example is an HTML file.

In the following the term 'dynamic webpage' should be interpreted to mean a webpage which is generated on-the-fly when a visitor to the webpage makes a request to the webpage, e.g. an URL request. The webpage is assembled from metadata. The webpage is, in this case, dynamically generated at the server.

In the following the term 'interactive webpage' should be interpreted to mean a webpage which contains interactive parts. A good HTML5 page may allow a visitor to interact with the webpage in the browser. The webpage is, in this case, interactive at the client.

In the following the term 'non-interactive webpage' should be interpreted to mean a webpage with no interactive parts, and which is adapted to present information. A visitor to the webpage will not be able to perform any actions which might lead to an interactive change on the webpage. The webpage is, in this case, non-interactive at the client.

Thus, static/dynamic properties relate to the server side of the system, and interactive/non-interactive properties relate to the client side of the system.

Most prior art webpages are static, interactive webpages. The present invention relates to generating and updating dynamic, interactive webpages.

According to the method of the first aspect of the invention, the webpage is either generated or updated at the client. Thus, the method of the invention may result in a new webpage being generated, or it may result in an existing webpage being updated, at the client side..

Initially, a main layout is provided, and the main layout substantially covers the webpage. Thus, the main layout substantially defines the overall structure of the webpage, including how various elements of the webpage are arranged relative to each other.

Next, two or more rendering elements are provided within the main layout. In the present context, the term 'rendering element' should be interpreted to mean an element of a webpage, which is adapted to perform a function and/or an action at the webpage. A function performed by a rendering element could, e.g., be generating an output to be presented at the webpage, e.g. a visible output, such as the visual appearance of the rendering element, or an audible output. An action performed by a rendering element could, e.g., be updating other rendering elements, e.g. text or visual cues of other rendering elements, performing a request to the server and processing it, navigating to another URL, etc.

At least one of the rendering elements defines interactive functionality allowing changes to be performed to the rendering element. Thus, the webpage is an interactive webpage, as opposed to a non-interactive webpage containing no interactive parts. The interactive functionality may be activated by a visitor visiting the webpage, the visitor interacting with the webpage, thereby causing changes to the webpage, via the rendering element. In this case the interactive functionality may include a tick box, a form which can be filled in, a poll, etc. As an alternative, the interactive functionality may be activated by the system running the webpage, e.g. by a timer or a message from the web server. In this case the interactive functionality may include the webpage automatically updating at specific time intervals, such as every 10 seconds, like a 'Stock Ticker' or a weather reporting webpage. As an alternative, the interactive functionality may include automatic updates of the inventory status of a web shop in response to a visitor buying an item.

Next, relations are provided between the rendering elements. The relations may, e.g., be in the code, in an XML file or on a disk. The relations are preferably dynamic, and they may be updatable via a CMS and/or via a development tool used by a developer building and/or managing the webpage. The relations allow the rendering elements to interact in such a manner that changes performed to one rendering element affect one or more settings of another rendering element. Settings being affected in this manner may, e.g., be language of content being presented, text, visual cues, such as colours, bold, italics or fonts of the text, hiding or showing text or other visual items, enabling or disabling or changing the entire webpage, etc. Accordingly, when a relation has been provided between two rendering elements, these two rendering elements are interlinked, and settings of one rendering elements can be affected by changes made to the other rendering element, even though the rendering elements are separate elements which can be handled or managed individually by a developer or a website manager.

Thus, when changes are performed to a rendering element defining interactive functionality, such changes may affect settings of another rendering element if an appropriate relation has been provided between these two rendering elements. Thereby it is no longer required that the interactive functionality and the settings which it is desired to affect due to changes performed via the interactive functionality are arranged within the same element of the webpage. Instead, the interactive functionality and the settings to be affected can be provided in separate rendering elements, which can each be arranged on the webpage in any suitable manner. This allows a website manager to build webpages of high complexity in an easy manner, using smaller 'building blocks', including the rendering elements. Furthermore, the relations between the rendering elements provide the desired interactivity between the rendering elements allowing changes performed to one rendering element to affect settings of another rendering element. A development tool may be applied to assist the website manager in managing the relations between the rendering elements.

Furthermore, at least one page code object is/are provided within the main layout. Normally, each webpage will comprise one page code object. However, it is not ruled out that two or more page code objects are provided within the main layout of a given webpage. The purpose of a page code object is to act as a controller for the webpage. It controls how the rendering elements on the webpage communicate and interact. It provides extensibility points for programmers to add to. While rendering elements are generic, page code objects are specific to a single page. The business logic of a web page is often placed in the page code object. As the name suggest, it holds the programming code for the web page.

The page code object(s) contain(s) information regarding the rendering elements and the relations between the rendering elements. The page code object(s) may be hardcoded for a specific webpage, or it/they may be generic in the sense that the same page code object may be used for several webpages. As mentioned above, the relations between the rendering elements are preferably dynamic, but one or more relations may, alternatively, be hardcoded for a specific page. Thus the page code object(s) keep(s) track of which rendering elements are present on the webpage, where the rendering elements are arranged, and which relations exist between which rendering elements. Furthermore, since each page code object is provided within the main layout, it is present in the webpage in the same manner as the rendering elements. This is an advantage because the basic rendering engine of the webpage is not changed. Accordingly, the same rendering engine can be used for generating or updating a static webpage and a dynamic, interactive webpage. Accordingly, a simple rendering engine can be used. Furthermore, since the webpage is dynamically generated (as opposed to traditional, static webpages), the page code object can easily be changed or replaced. Accordingly, all the advantages of a dynamically generated webpage are obtained, while maintaining the easy way of developing a static webpage. The page code object(s) are arranged at the client side of the system.

Page code objects, or code behind, have previously been used in static webpages, i.e. webpages which are not generated dynamically. In these cases the page code object controls generation of code during development of the webpage, and is arranged as an intrinsic part of the rendering engine, and in some systems is the rendering engine. However, the page code object is, in these cases, not capable of handling dynamically generated webpages, because the page code object is written at design time, and therefore does not support changes made after publishing the static webpage. It is an advantage that the inventors of the present invention have realized that by providing a page code object within the main layout of the webpage, the page code object is capable of handling dynamically generated, interactive webpages. As described above, page code objects in prior art, static webpages are generated when the webpage is compiled, i.e. before the webpage is published. Thereby the functionality is restricted to the rendering elements which are available before publishing of the webpage. However, according to the present invention, a dynamic rendering engine is used, which allows developers to add new rendering elements after publishing. The page code object discovers these new rendering elements automatically, and is able to databind them. In essence this allows the developer to change the webpage substantially without having to compile or republish.

For example:

### From a user point of view.

A user is making a purchase on a web site. She has put a single pair of glasses in her shopping basket. She now opens her shopping basket, which displays a web page showing a pair of glasses with a quantity of 1, price of $100, tax of 10$ and a total of $110.

She now enters a discount code. Without requesting the server, the price is now updated to 90$, the tax is updated to 9$ and the total is updated to $99.

She then increase the quantity of glasses to 2. Without requesting the server, the tax is updated to 18$ and the total is updated to $198.

Since she is now above $150, the web page informs her, she now qualifies for free delivery.

### From a technical point of view.

The webpage comprises the following rendering elements:
- Item
- Quantity
- Price
- Tax
- Total
- Discount code
- Free delivery (hidden by default)

The page code object has references to the following interactive rendering elements (Item is not interactive):
- Quantity
- Price
- Tax
- Total
- Discount code
- Free delivery

The page code model defines the following relations or bindings between the rendering elements:
- Tax is dependent upon Quantity
- Tax is dependent upon Price
- Total is dependent upon Quantity
- Total is dependent upon Price
- Total is dependent upon Tax
- Price is dependent upon Discount

Free Delivery is not data bound, and is controlled manually by the page code object, since it has complex logic.

When the user enters the discount code, the following happens:
1. Discount code is updated by the user
2. Price is recalculated, since Price is dependent upon Discount code
3. Tax is recalculated, since Tax is dependent upon Price
4. Total is recalculated, since Total is dependent upon Tax

Thus, the page code object ensures that the Price rendering element is changed in response to changes to the Discount code rendering element, performed by the user, that the Tax rendering element is changed in response to the changes to the Price rendering element, and that the Total rendering element is changed in response to the changes to the Tax rendering element. Furthermore, this is performed in accordance with the defined relations between the rendering elements.

When the user changes the quantity, the following happens:
1. The Quantity is updated by the user.
2. Total is recalculated, since Total is dependent upon Quantity
3. Tax is recalculated, since Tax is dependent upon Quantity
4. Total is recalculated, since Total is dependent upon Tax
5. The page code detects, that the Total is now above $150, and makes the Free Delivery rendering visible.

Thus, the page code object ensures that the Total rendering element and the Tax rendering element are changed in response to the changes to the Quantity rendering element, performed by the user, that the Total rendering element is changed in response to the changes to the Tax rendering element, and that the Free Delivery rendering element is changed in response to the changes to the Total rendering element. Once again, this is performed in accordance with the defined relations between the rendering elements.

Accordingly, the page code object(s), in response to changes performed to one rendering element, control(s) changes to one or more settings of another rendering element, by means of the information regarding the rendering elements and the relations between the rendering elements, which the page code object(s) contain(s). This is possible because the page code object(s) contain(s) information about the rendering elements and about the relations between the rendering elements, and because the page code(s) is/are provided within the main layout.

To this end, the page code object(s) may transform the changed value into another value appropriate to the receiving end of the relation. In this case the relation may define a mapping or transformation of values between the sending and receiving rendering elements.

Thereby the webpage is generated or updated at the client.

Thus, using the method of the present invention, it is possible to provide an entirely new kind of webpage, defining a new structure with a page code object within the main layout, the page code object thereby forming part of the webpage being provided to the client. Thereby it is possible to provide webpages which are dynamically generated as well as interactive.

The method may further comprise the step of providing two or more sub-layouts arranged within the main layout, at least one of the rendering elements being arranged within a first sub-layout, and at least one of the rendering elements being arranged within a second sub-layout. According to this embodiment, changes performed to a rendering element arranged within one sub-layout may affect one or more settings of a rendering element arranged within another sub-layout, due to a relation provided between the two rendering elements. This makes it even easier for a website manager to build and manage a webpage of high complexity, since the sub-layouts can be managed independently of each other, while providing the possibility of the rendering elements interacting, regardless of whether they are arranged within the same sub-layout or not.

The page code object(s) may be provided in the form of (a) rendering element(s). According to this embodiment, each page code object is provided within the main layout in exactly the same manner as the other rendering elements, and on an equal footing with them. This is an advantage, because it makes the rendering engine simpler, and because creating the page code object(s) requires the same procedure as creating a rendering element.

The step of providing relations between the rendering elements may be performed by means of databinding. Databinding is sometimes used for establishing connections between application user interface (UI) and business logic. If the binding has the correct settings and the data provides the proper notifications, then, when the data changes its value, the elements that are bound to the data reflect changes automatically. Thus, according to this embodiment, the relations between the rendering elements are connections of this kind. This step may be the result of using a development tool.

At least one of the relations between the rendering elements may be a one-way relation, allowing changes performed to a first rendering element to affect one or more settings of a second rendering element, while not allowing changes performed to the second rendering element to affect settings of the first rendering element.

In this case, the method may further comprise the steps of:
- the second rendering element monitoring the first rendering element, and
- the second rendering element performing changes to one or more relevant settings in the case that it is detected that changes have been performed to the first rendering element.

According to this embodiment, the second rendering element 'listens' for changes performed to the first rendering element. When the second rendering element detects that a relevant change has been performed to the first rendering element, it ensures that corresponding changes are performed to the relevant settings of the second rendering element. Thereby it is ensured that changes performed to the first rendering element are promptly reflected in the settings of the second rendering element.

Alternatively or additionally, at least one of the relations between the rendering elements may be a two-way relation, allowing changes performed to a first rendering element to affect one or more settings of a second rendering element, as well as allowing changes performed to the second rendering element to affect one or more settings of the first rendering element.

In this case, the method may further comprise the steps of:
- the first rendering element monitoring the second rendering element, and the second rendering element monitoring the first rendering element,
- the first rendering element performing changes to one or more relevant settings in the case that it is detected that changes have been performed to the second rendering element, and
- the second rendering element performing changes to one or more relevant settings in the case that it is detected that changes have been performed to the first rendering element.

Thus, according to this embodiment, the first rendering element as well as the second rendering element 'listens' for changes performed to the other rendering element. When a rendering element detects that a relevant change has been performed to the other rendering element, it ensures that corresponding changes are performed to its settings. Thereby it is ensured that changes performed to either of the rendering elements are promptly reflected in the settings of the other rendering element.

At least one of the rendering elements may define interactive functionality allowing a visitor to the webpage to interact with the webpage, and at least one of the relations between the rendering elements may allow the rendering elements to interact in such a manner that changes performed to the webpage by a visitor, via one rendering element, affects one or more settings of another rendering element. According to this embodiment, the changes to at least one rendering element are made by a visitor visiting the webpage, the visitor interacting with the webpage, via the rendering element. As an alternative, the changes may be initiated by other factors, such as timers or messages from a web server.

When a web page is being generated, one or more rendering elements may be generated in a way that requires the page code object during initialization to retrieve the widget and data model from the server.

The point of this is that it may be costly or time-consuming to generate a rendering element. This may cause a significant (and for users annoying) delay before the web page appears. To work around this, the rendering element may be rendered by the rendering engine in a way that allows the page code object to detect the rendering element and request a complete "rendering" from the server. The complete rendering includes both a widget and a data model. As such the rendering element data model can be added to the page code object data model not only at initialization, but also at a later point in time.

Each rendering element may comprise a widget and a model structure, and the method may further comprise the step of:
- the page code object(s) building a data model containing the model structures of each of the rendering elements.

In this case the step of the page code object(s) controlling changes to one or more settings may be performed by means of the data model.

In the present context the term 'model structure' should be interpreted to mean a data structure which exposes interactive or changeable properties of the rendering element. In the present context the term 'widget' should be interpreted to mean a visual presentation of the model structure. Thus, according to this embodiment, the part of the rendering element which defines the interactive functionality, and the part of the rendering element relating to the visual presentation of the model structure are separated.

Furthermore, the page code object(s) built(s) a data model containing the model structures of the rendering elements, and the page code object(s) control(s) the changes of the one or more settings by means of the data model. Thus, the page code object(s) keep(s) track of the rendering elements and the relations between the rendering elements by means of the data model.

The data model may be accessed by all rendering elements of the webpage. Furthermore, certain elements of the data model may be shared between two or more rendering elements. For instance, if a check box of one rendering element is ticked, then a data field of the data model is updated. A second rendering element, which also uses this data field, can then update itself in response to the updated state of the data field.

In the case that the webpage comprises two or more page code objects, each page code object will most often build a separate data model. However, it could also be envisaged that two or more page code objects build a common data model which is associated to all of the two or more page code objects. Furthermore, it could be envisaged that one or more page code objects build one or more data models, while one or more other page code objects are not associated with a data model.

The method may further comprise the step of the page code object(s) creating one or more relations between the rendering elements and the data model. According to this embodiment, each of the rendering elements is connected to the data model via the relations created by the page code object(s). Furthermore, since the page code object(s) create(s) these relations, the page code object(s) control(s) how the rendering elements are related to the data model.

The step of the page code object(s) building a data model may comprise the page code object(s) scanning the webpage in order to identify the rendering elements. According to this embodiment, the page code object(s) scan(s) the webpage, thereby identifying the rendering elements, e.g. by identifying specific markers within the webpage, indicating the locations of the rendering elements. Once a rendering element has been identified in this manner, the page code object(s) add(s) information regarding the rendering element to the data model.

In a static webpage all the rendering elements are known at design time and therefore references can be hardcoded. However, this is not possible in a dynamically generated webpage, since the rendering elements are not known at design time. Accordingly, this is an advantageous embodiment.

The step of providing relations between the rendering elements may be performed by the page code object(s) by means of the data model. According to this embodiment, the data model contains and controls the information regarding the rendering elements as well as the information regarding the relations between the rendering elements.

The method may further comprise the step of the page code object(s) making the data model available to a developer building and/or maintaining the webpage. According to this embodiment, a developer building and/or maintaining the webpage can easily gain access to the information which is available in the data model, i.e. information regarding the rendering elements and the relations between the rendering elements. This makes it very easy for the developer to build or maintain the webpage, because it abstracts the webpage into a much simpler data model, where only the important and changeable properties are exposed. By hiding non-important and unchangeable parts, the risk of programming errors are greatly reduced. The data model is a logical representation of the webpage whereas the actual webpage is a visual representation. A single property in the data model may affect multiple parts of the visual representation.

The data model can further be sent to the server having the webpage residing thereon. This allows the server to obtain the full state of the current webpage. The server can then perform operations based on the full state. The server can return updates or a new full state to the client whereupon the data model is changed and by databinding the visual representation is updated accordingly. Sending the data model to the server is a single and generic operation that can be used in all scenarios involving communication with the server. As such this eliminates the need for developing specific code for each scenario, thereby making it even easier to generate and update the webpage. Receiving updates or a full state from the server is also a single and generic operation. The data model could be fully updated. As an alternative, the data model could be partially or asynchronously updated. For instance, new stock ticker data could be asynchronously loaded from the server into one of the data fields of the data model, thereby automatically causing the rendering elements subscribing to that data field to update their visual presentation accordingly, e.g. by means of the widgets.

By using the approach described above, the protocol for client/server communication is generalized and easily implemented.

According to a second aspect the invention provides a development tool for generating or updating a webpage, the webpage residing on a server and being presented on a client, the webpage comprising a main layout at least substantially covering the webpage, two or more rendering elements within the main layout, at least one of the rendering elements defining interactive functionality allowing changes to be performed to the rendering elements, and at least one page code object within the main layout, the development tool comprising:
- a user interface allowing a user to access the page code object(s) in order to provide and/or alter relations between the rendering elements, said relations allowing the rendering elements to interact in such a manner that changes performed to one rendering element affects one or more settings of another rendering element.

It should be noted that a person skilled in the art would readily recognise that any feature described in combination with the first aspect of the invention could also be combined with the second aspect of the invention, and vice versa. Thus, the development tool according to the second aspect of the invention could advantageously be used for performing the method according to the first aspect of the invention. Accordingly, the remarks set forth above with reference to the first aspect of the invention are equally applicable here.

The development tool according to the second aspect of the invention may, e.g., be used by a developer who is building and/or managing a webpage. The user interface allows the developer to access the webpage, in particular the page code object(s) provided within the main layout of the webpage. The development tool can then be used for managing the relations between the rendering elements of the webpage, including adding, removing or altering the relations, or setting up rules for automatically generated relations.

The page code object(s) may comprise a data model for managing relations between the rendering elements. According to this embodiment, the user interface may advantageously allow the user to access the data model.

The user interface may further allow a user to add, remove or alter rendering elements of the webpage. According to this embodiment, the user, such as a developer can use the tool for managing the rendering elements as such, as well as for managing the relations between the rendering elements. Since the rendering elements can be managed separately and individually, as described above, even complex webpages can be generated and managed, using the tool.

Below are an example of a source code for an edit field, and an example of a source code for a page code object, used for performing a method according to an embodiment of the invention.

### Edit field:

```
 (function($, ko)
 {
  Sitecore.Models.TextBox = function(element)
  {
    this.text = new ko.observable(element.attr("value"));
    this.isVisible = new ko.observable(element.is(":visible"));
    this.isReadOnly = new ko.observable(element.attr("readonly") == "readonly");
  };
  $.widget("sc.textBox", {
    options: {},
    _create: function()
    {
      this.model = new Sitecore.Models.TextBox(this.element);
    },
    _setOption: function()
    {
    },
    destroy: function()
    {
      $.Widget.prototype.destroy.call(this);
    }
  });
 })(jQuery, ko);
 $(document).ready(function() {
  Sitecore.Page.registerComponent(".sc-textBox", "textBox");
 });
```

### Page code:

```
 $.extend(Sitecore.Page, {
 initialize: function () {
   this.initializeComponents();
   this.applyBindings();
   this.on("change:TextBox1_Text", this.refreshPage, this);
 },
 refreshPage: function() {
   this.trigger("update:TextBox2");
   this.trigger("update:Button1");
 }
 });
 $(document).ready(function () {
 Sitecore.Page.initialize();
 });
```

### BRIEF DESCRIPTION OF THE DRAWINGS

The invention will now be described in further detail with reference to the accompanying drawings in which
Fig. 1 is a schematic view of a webpage being managed according to a first embodiment of the invention,
Fig. 2 is a schematic view of a webpage being managed according to a second embodiment of the invention,
Fig. 3 is a schematic view of a webpage being managed according to a third embodiment of the invention,
Fig. 4 is a flow diagram illustrating a method according to an embodiment of the invention,
Fig. 5 is a flow diagram illustrating a method according to an alternative embodiment of the invention, and
Fig. 6 is a screen shot illustrating a tool for a developer of a webpage, the tool applying a method according to an embodiment of the invention.

### DETAILED DESCRIPTION OF THE DRAWINGS

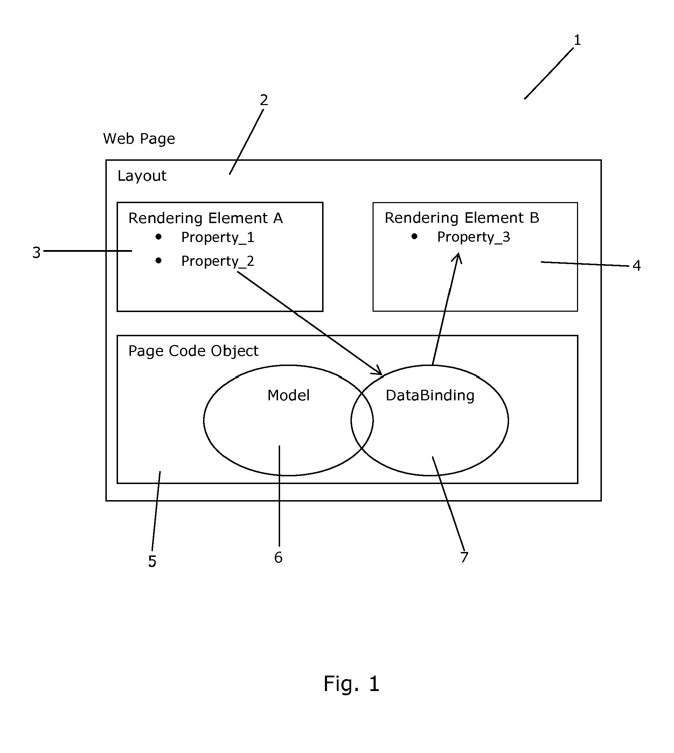

Fig. 1 is a schematic view of a webpage 1. The webpage 1 may form part of a website, and is managed, i.e. generated and/or updated, by means of a method according to a first embodiment of the invention.

The webpage 1 comprises a main layout 2, which substantially covers the webpage 1. Thus, the main layout 2 defines the positions of various elements of the webpage 1.

A first rendering element 3 and a second rendering element 4 are arranged within the main layout 2. The rendering elements 3, 4 are separate elements, which are handled separately during generation and updating of the webpage 1. The first rendering element 3 exhibits two properties, and the second rendering element 4 exhibits one property.

Furthermore, a page code object 5 is arranged within the main layout 2. The page code object 5 defines a data model 6 and a databinding mechanism 7. Via the databinding mechanism 7, the page code object 5 defines a relation between the second property (Property_2) of the first rendering element 3 and the property (Property_3) of the second rendering element 4. When changes are performed to the first rendering element 3 in such a manner that the second property (Property_2) is affected, the relation established via the databinding mechanism 7 ensures that these changes are reflected in the property (Property_3) of the second rendering element 4. Thereby interactive properties can be handled between rendering elements 3, 4, which are separate elements of the webpage 1, thereby allowing a manager of the website to build and manage complex webpages in an easy manner. Thus, the present invention provides a tool for the manager of the website, assisting the manager in defining the relations between the properties of the rendering elements.

The relation is a one-way relation in the sense that changes performed to the first rendering element 3 are reflected in the second rendering element, but changes performed to the second rendering element are not reflected in the first rendering element. This may be defined by the manager of the website, in accordance with the requirements of the specific webpage.

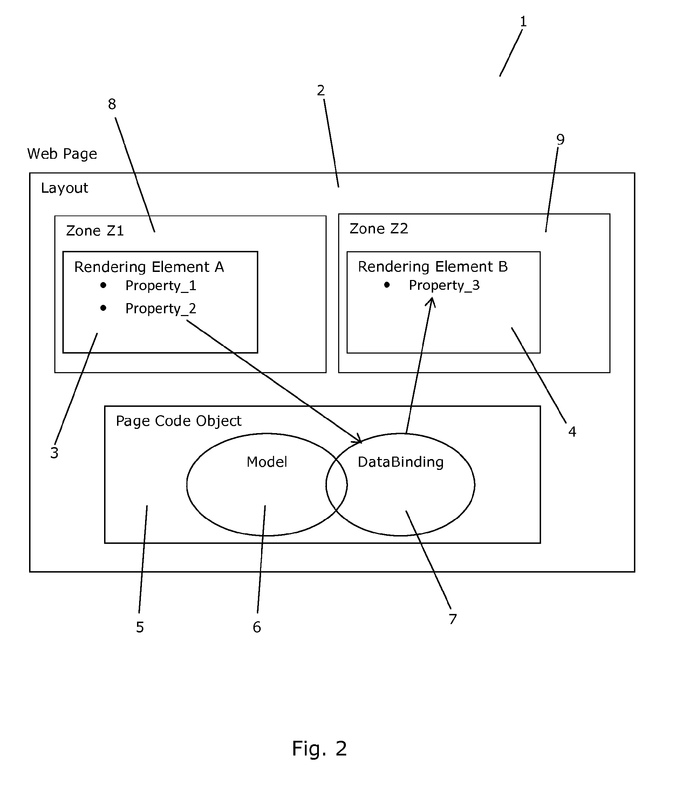

Fig. 2 is a schematic view of a webpage 1. The webpage 1 may form part of a website, and is managed, i.e. generated and/or updated, by means of a method according to a second embodiment of the invention.

Similarly to the embodiment illustrated in Fig. 1, the webpage 1 of Fig. 2 comprises a main layout 2 substantially covering the webpage 1.

In Fig. 2 the main layout 2 comprises a first sub-layout 8 and a second sub-layout 9, in the form of zones of the main layout 2. The sub-layouts 8, 9 are handled as separate layouts within the webpage 1, and providing such sub-layouts 8, 9 therefore makes it even easier for a manager of the website to generate and update webpages of high complexity.

A first rendering element 3 is arranged within the first sub-layout 8, and a second rendering element 4 is arranged within the second sub-layout 9. Similarly to the situation illustrated in Fig. 1, the first rendering element 3 exhibits two properties, and the second rendering element 4 exhibits one property.

Similarly to the embodiment of Fig. 1, a page code object 5 is arranged within the main layout 2, and the page code object 5 defines a data model 6 and a databinding mechanism 7. Via the databinding mechanism 7, the page code object 5 defines a relation between the second property (Property_2) of the first rendering element 3 and the property (Property_3) of the second rendering element 4, essentially in the manner described above with reference to Fig. 1.

However, in the embodiment illustrated in Fig. 2, a relation is provided between rendering elements 3, 4 which are arranged in separate sub-layouts 8, 9. Thus, changes performed to a rendering element can even affect properties of a rendering element which is arranged in another sub-layout. Thereby it is no longer required that the rendering elements which must be related are arranged within the same sub-layout.

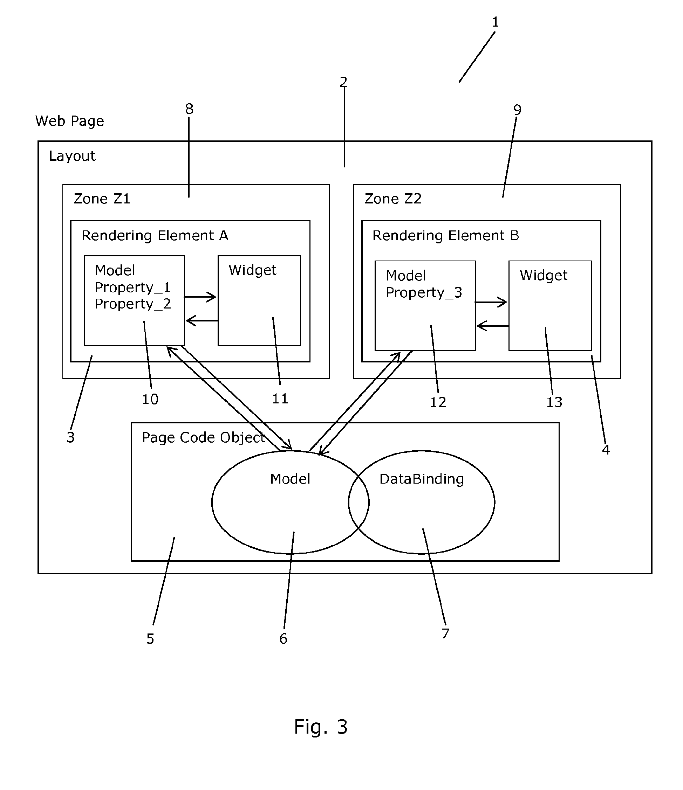

Fig. 3 is a schematic view of a webpage 1. The webpage 1 may form part of a website, and is managed, i.e. generated and/or updated, by means of a method according to a third embodiment of the invention.

Similarly to the embodiment illustrated in Fig. 2, the webpage 1 of Fig. 3 comprises a main layout 2. A first sub-layout 8 with a first rendering element 3 and a second sub-layout 9 with a second rendering element 4 are arranged within the main layout 2. Furthermore, a page code object 5 defining a data model 6 and a databinding mechanism 7 is arranged within the main layout 2.

The first rendering element 3 comprises a model structure 10 and a widget 11. The model structure 10 defines two properties of the first rendering element 3, and the widget 11 defines a visual presentation of the properties of the first rendering element 3. The model structure 10 and the widget 11 interact, thereby ensuring that the visual presentation defined by the widget 11 appropriately reflects the properties defined by the model structure 10, and vice versa. The interactions between the model structure 10 and the widget 11 may advantageously take place via databinding.

Similarly, the second rendering element 4 comprises a model structure 12 and a widget 13. The model structure 12 defines a single property of the second rendering element 4, and the widget 13 defines a visual presentation of the property of the second rendering element 4. The model structure 12 and the widget 13 interact in the manner described above.

Thus, in the embodiment illustrated in Fig. 3, the properties of the rendering elements 3, 4 are separated from the visual presentation of the rendering elements 3, 4.

Via the data model 6, and using the databinding mechanism 7, the page code object 5 defines a relation between the model structure 10 of the first rendering element 3 and the model structure 12 of the second rendering element 4. Thereby changes performed to the model structure 10 of the first rendering element 3 can be reflected in the model structure 12 of the second rendering element 4, and changes performed to the model structure 12 of the second rendering element 4 can be reflected in the model structure 10 of the first rendering element 3. More particularly, changes performed to the properties defined by one of the model structures 10, 12 can be reflected in the properties defined by the other model structure 12, 10.

The relation defined between the model structures 10, 12 in Fig. 3 is a two-way relation in the sense that changes performed to the model structure 10 of the first rendering element 3 can affect the model structure 12 of the second rendering element 4, and changes performed to the model structure 12 of the second rendering element 4 can affect the model structure 10 of the first rendering element 3. Furthermore, the relation between the model structures 10, 12 is defined and controlled by means of the data model 6 of the page code object 5.

It should be noted that, even though Figs. 1-3 illustrate webpages 1 having only two rendering elements 3, 4 arranged within the main layout 2, it is within the scope of the present invention that three or more rendering elements may be arranged within the main layout 2, and that relations may be defined between any of these rendering elements, said relations being defined and controlled by the page code object 5 in the manner described above. Furthermore, two or more page code objects may be provided within the main layout 2, said page code objects in combination defining and controlling relations between the rendering elements, essentially in the manner described above.

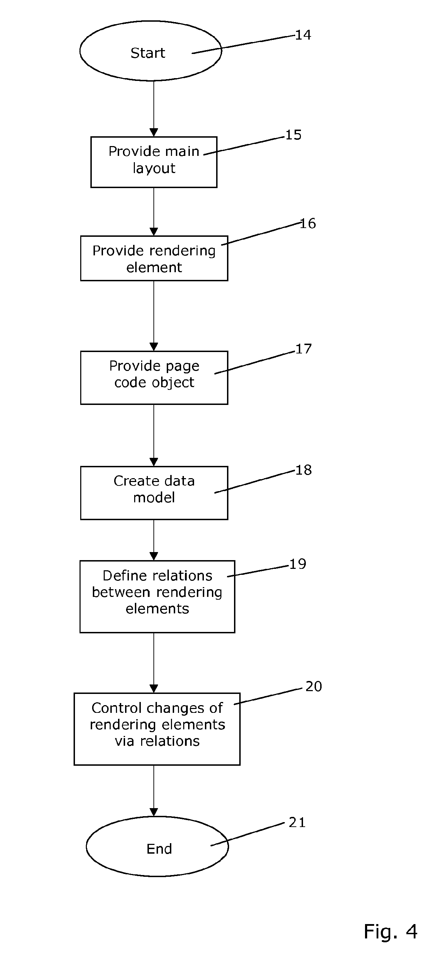

Fig. 4 is a flow diagram illustrating a method according to an embodiment of the invention. The process is started at step 14. At step 15 a main layout is provided in such a manner that the main layout substantially covers a webpage to be generated. At step 16 two or more rendering elements are provided within the main layout. At step 17 a page code object is provided, also within the main layout. Thus, within the main layout there is provided at least two rendering elements and a page code object, all in the form of separate elements.

At step 18 the page code object creates a data model. The data model contains information regarding the rendering elements, such as information regarding the positions of the rendering elements within the main layout, and properties defined by the rendering elements.

At step 19 the page code object defines relations between the rendering elements, by means of the data model. Thus, the data model contains information regarding the rendering elements, as described above, as well as information regarding the relations between the rendering elements, i.e. how the rendering elements are related.

At step 20 the page code object controls changes of rendering elements via the relations between the rendering elements, and by means of the data model. This may be done in the following manner. When changes are performed to a property of one rendering element, it is investigated whether the changes are relevant to any of the other rendering element which the rendering element being changed is related to. If this is the case for one or more rendering elements, appropriate changes are performed to these rendering elements. Step 20 may be performed for as long as required.

### Finally, the processed is ended at step 21.

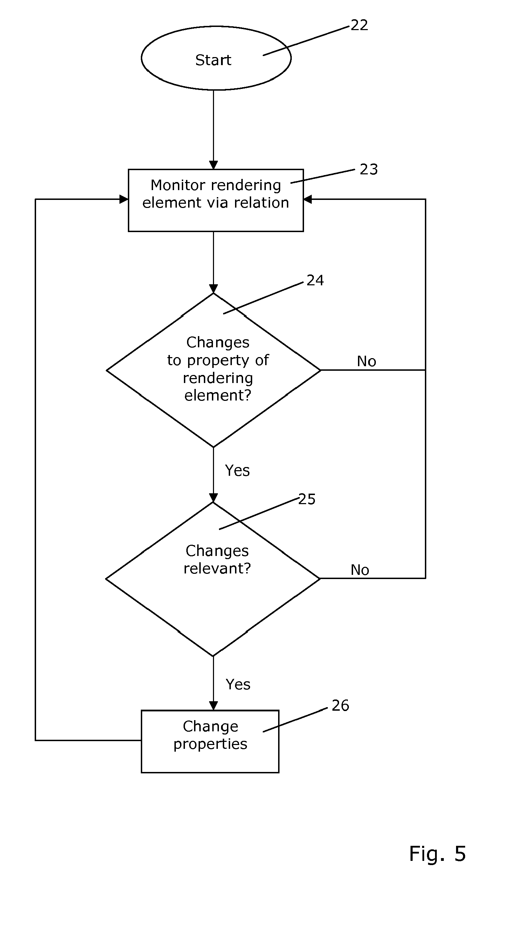

Fig. 5 is a flow diagram illustrating a method according to an alternative embodiment of the invention. The method illustrated in Fig. 5 may be combined with the method illustrated in Fig. 4, e.g. by performing the steps illustrated in Fig. 5 as a part of method step 20 of the method illustrated in Fig. 4.

The process is started at step 22. At step 23 a first rendering element arranged within a main layout of a webpage monitors a second rendering element arranged within the main layout. The monitoring takes place via a relation defined between the two rendering elements. The monitoring may take place directly between the rendering elements, or it could take place via a data model as described above. The first rendering element may "subscribe" to events taking place at the second rendering element. Alternatively, the monitoring may take place via a "pulling" algorithm.

At step 24 it is investigated, by means of the monitoring described above, whether or not changes have been performed to the second rendering element. If this is not the case, the process is returned to step 23 in order to continue monitoring the second rendering element.

If step 24 reveals that changes have been made to the second rendering element, it is investigated, at step 25, whether the performed changes are relevant to the first rendering element. If this is not the case, the process is returned to step 23 in order to continue monitoring the second rendering element.

If step 25 reveals that the changes performed to the second rendering element are relevant to the first rendering element, one or more settings of the first rendering element is/are changed in accordance with the changes performed to the second rendering element, at step 26. Then the process is returned to step 23 in order to continue monitoring the second rendering element and repeat the process described above.

It should be noted that the process illustrated in Fig. 5 could be performed simultaneously for each relation defined between a number of rendering elements arranged within the main layout of the webpage.

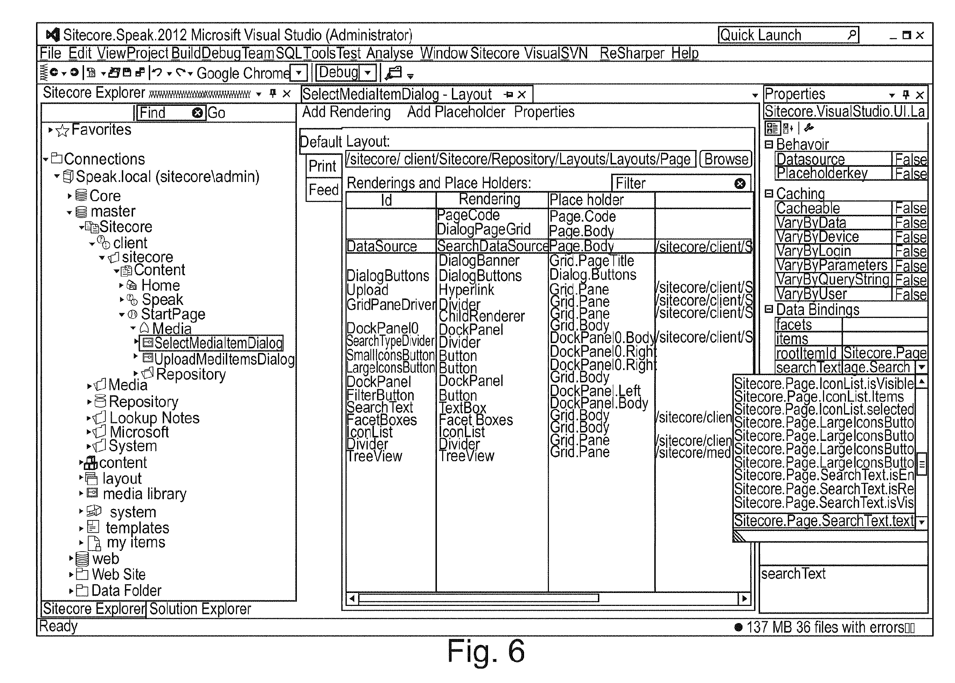

Fig. 6 is a screen shot illustrating a tool (Sitecore Rocks) for a developer of a webpage, the tool applying a method according to an embodiment of the invention. The tool is running in Microsoft^{®} Visual Studio. Sitecore Rocks is a plugin to Microsoft^{®} Visual Studio for developing websites.

The screenshot of Fig. 6 shows the Layout Designer for the SelectMediaItemDialog item. All the elements in the central list are renderings. The DataSource rendering element is selected and the properties for that renderings are shown in the Properties window to the right. The searchText property is selected and is a data-bindable property. The drop-down list shows other data-bindable properties that searchText can be bound to.

## Claims

1. A method for generating or updating a webpage, the webpage residing on a server and being presented on a client, the method comprising the steps of:
- providing a main layout, said main layout at least substantially covering the webpage,
- providing two or more rendering elements within the main layout, each rendering element being adapted to perform a function and/or an action, and at least one of the rendering elements defining interactive functionality allowing changes to be performed to the rendering element,
- providing relations between the rendering elements, said relations allowing the rendering elements to interact in such manner that changes performed to one rendering element affects one or more settings of another rendering element,
- providing at least one page code object within the main layout, said page code object(s) containing information regarding the rendering elements and the relations between the rendering elements, and
- in response to changes performed to one rendering element, the page code object(s) controlling changes to one or more settings of another rendering element, by means of said information regarding the rendering elements and the relations between the rendering elements, thereby generating or updating the webpage at the client.

2. A method according to claim 1, further comprising the step of providing two or more sub-layouts arranged within the main layout, at least one of the rendering elements being arranged within a first sub-layout, and at least one of the rendering elements being arranged within a second sub-layout.

3. A method according to claim 1 or 2, wherein the page code object(s) is/are provided in the form of (a) rendering element(s).

4. A method according to any of the preceding claims, wherein the step of providing relations between the rendering elements is performed by means of databinding.

5. A method according to any of the preceding claims, wherein at least one of the relations between the rendering elements is a one-way relation, allowing changes performed to a first rendering element to affect one or more settings of a second rendering element, while not allowing changes performed to the second rendering element to affect settings of the first rendering element.

6. A method according to claim 5, further comprising the steps of:
- the second rendering element monitoring the first rendering element, and
- the second rendering element performing changes to one or more relevant settings in the case that it is detected that changes have been performed to the first rendering element.

7. A method according to any of the preceding claims, wherein at least one of the relations between the rendering elements is a two-way relation, allowing changes performed to a first rendering element to affect one or more settings of a second rendering element, as well as allowing changes performed to the second rendering element to affect one or more settings of the first rendering element.

8. A method according to claim 7, further comprising the steps of:
- the first rendering element monitoring the second rendering element, and the second rendering element monitoring the first rendering element,
- the first rendering element performing changes to one or more relevant settings in the case that it is detected that changes have been performed to the second rendering element, and
- the second rendering element performing changes to one or more relevant settings in the case that it is detected that changes have been performed to the first rendering element.

9. A method according to any of the preceding claims, wherein at least one of the rendering elements defines interactive functionality allowing a visitor to the webpage to interact with the webpage, and wherein at least one of the relations between the rendering elements allows the rendering elements to interact in such a manner that changes performed to the webpage by a visitor, via one rendering element, affects one or more settings of another rendering element.

10. A method according to any of the preceding claims, wherein each rendering element comprises a widget and a model structure, the method further comprising the step of:
- the page code object(s) building a data model containing the model structures of each of the rendering elements,
wherein the step of the page code object(s) controlling changes to one or more settings is performed by means of the data model.

11. A method according to claim 10, further comprising the step of the page code object(s) creating one or more relations between the rendering elements and the data model.

12. A method according to claim 10 or 11, wherein the step of the page code object(s) building a data model comprises the page code object(s) scanning the webpage in order to identify the rendering elements.

13. A method according to any of claims 10-12, wherein the step of providing relations between the rendering elements is performed by the page code object(s) by means of the data model.

14. A method according to any of claims 10-13, further comprising the step of the page code object(s) making the data model available to a developer building and/or maintaining the webpage.

15. A development tool for generating or updating a webpage, the webpage residing on a server and being presented on a client, the webpage comprising a main layout at least substantially covering the webpage, two or more rendering elements within the main layout, at least one of the rendering elements defining interactive functionality allowing changes to be performed to the rendering elements, and at least one page code object within the main layout, the development tool comprising:
- a user interface allowing a user to access the page code object(s) in order to provide and/or alter relations between the rendering elements, said relations allowing the rendering elements to interact in such a manner that changes performed to one rendering element affects one or more settings of another rendering element.

16. A development tool according to claim 15, wherein the page code object(s) comprise(s) a data model for managing relations between the rendering elements.

17. A development tool according to claim 15 or 16, wherein the user interface further allows a user to add, remove or alter rendering elements of the webpage.
